# EUROPÄISCHE PATENTSCHRIFT

(11) **EP 3 449 219 B1**
(45) Veröffentlichungstag und Bekanntmachung des Hinweises auf die Patenterteilung: **01.01.2020**
(21) Anmeldenummer: 17720475.7
(22) Anmeldetag: 28.04.2017
(51) Int. Cl.: G01D 21/00, G05B 23/02

(54) **FELDGERÄT ZUR BESTIMMUNG EINER PROZESSGRÖSSE IN DER PROZESSAUTOMATISIERUNG**
FIELD DEVICE FOR DETERMINING A PROCESS VARIABLE IN PROCESS AUTOMATION
APPAREIL DE TERRAIN SERVANT À LA DÉTERMINATION D'UNE GRANDEUR DE PROCESSUS DANS L'AUTOMATISATION DE PROCESSUS

(30) Priorität: 28.04.2016 DE 102016207289
(43) Veröffentlichungstag der Anmeldung: 06.03.2019
(73) Patentinhaber: Siemens Aktiengesellschaft, 80333 München (DE)
(72) Erfinder: HEPP, Joachim, 76307 Karlsbad (DE); MUCHA, Adrian, 76187 Karlsruhe (DE)
(86) Internationale Anmeldenummer: PCT/EP2017/060168
(87) Internationale Veröffentlichungsnummer: WO 2017/186900

(56) Entgegenhaltungen:
- EP-A1- 2 153 288
- EP-A2- 2 522 974

## Beschreibung

Die Erfindung betrifft ein Feldgerät zur Bestimmung einer Prozessgröße in der Prozessautomatisierung, mit
- Sensormitteln zum Erfassen und Umsetzen der Prozessgröße in ein elektrisches Messsignal,
- einer Auswerteeinrichtung zum Verarbeiten des Messsignals zu einem Messwert,
- einer Ausgabeeinrichtung zur Ausgabe des Messwerts und
- einer Diagnoseeinrichtung zur Überwachung der Funktion des Feldgeräts und Erzeugung und Ausgabe von binären Statusmeldungen, wobei die Diagnoseeinrichtung dazu ausgebildet ist, bei Detektion mindestens eines vorgegebenen Fehlers diesen über eine erste binäre Statusmeldung zu melden, den ausgegebenen Messwert über eine zweite binäre Statusmeldung als vorübergehend ungültig zu kennzeichnen, und/oder die Ausgabeeinrichtung zur Ausgabe eines Ersatzwertes anstelle des Messwertes zu veranlassen.

Ein derartiges Feldgerät ist aus der EP 2 153 288 B1 bekannt.

In prozesstechnischen Anlagen führen örtlich verteilte dezentrale Feldgeräte (Prozessgeräte) vorgegebene Funktionen im Rahmen der Anlagen- bzw. Prozessautomatisierung aus und tauschen dabei prozess-, anlagen- und/oder geräterelevante Informationen mit übergeordneten Komponenten des Automatisierungssystems, insbesondere dessen Leit- bzw. Engineeringsystem, aus. Zu den Feldgeräten, welche im Rahmen ihrer Funktion Prozessgrößen erfassen, gehören insbesondere Messumformer für Druck, Temperatur, Durchfluss, Füllstand usw., sowie Analysengeräte für Gas- oder Flüssigkeitsanalyse. Sensormittel, die z. B. bei einem Temperaturmessumformer sehr einfach und bei Absorptionsspektrometer vergleichsweise komplex sein können, erfassen eine Prozessgröße, hier also die Temperatur oder eine wellenlängenspezifische Lichtabsorption, und setzen diese in ein elektrisches Messsignal um. Das unmittelbar erhaltene Messsignal (Rohsignal) wird zunächst analog aufbereitet, z. B. gefiltert und verstärkt, und dann auf digitalem Wege zu einem Messwert, z. B. einem Temperaturmesswert oder einem Konzentrationsmesswert einer spezifischen Gaskomponente, weiterverarbeitet. Der Messwert kann digital oder analog ausgegeben werden, wobei im letzteren Fall ein zu dem Messwert proportionales Spannungssignal oder ein Stromsignal, üblicherweise im Bereich 4 bis 20 mA, erzeugt wird.

Um Feldgeräte im Bereich der Funktionalen Sicherheit (SIL) einsetzen zu können, müssen Fehler, die zu einem ungültigen Messwert führen können, erkannt und gemeldet werden. Zu diesem Zweck führt das Feldgerät eine Selbstüberwachung und Diagnose aus. Durch Ausgabe von binären Statusmeldungen können Fehler gemeldet und ausgegebene Messwerte als vorübergehend ungültig kennzeichnet werden. Weiterhin kann im Fehlerfall anstelle des Messwertes ein Ersatzwert ausgegeben werden, der außerhalb des Messwertebereichs liegt und als sicherheitsgerichtetes Signal zur automatischen Auslösung von automatischen Gegenmaßnahmen dient. Solche Notmaßnahmen können bis hin zum Abschalten von Anlagen und Anlagenteilen reichen.

Der Erfindung liegt daher die Aufgabe zugrunde, derartige schwerwiegende Eingriffe in den Prozessablauf beim Auftreten vorübergehender Fehler zu verhindern, ohne dass sicherheitsrelevante Informationen verloren gehen.

Gemäß der Erfindung wird die Aufgabe dadurch gelöst, dass bei dem Feldgerät der eingangs angegebenen Art
- die Diagnoseeinrichtung einen ersten Timer mit einer vorgegebenen ersten Ablaufzeit und einen zweiten Timer mit einer vorgegebenen zweiten Ablaufzeit enthält,
- die zweite Ablaufzeit kürzer als die erste Ablaufzeit ist,
- beide Timer bei Detektion des Fehlers gestartet und am Ende des detektierten Fehlers zurückgesetzt werden,
- der erste Timer bei Ablauf der ersten Ablaufzeit die Ausgabe des Ersatzwertes veranlasst und
- der zweite Timer bei Ablauf der zweiten Ablaufzeit den Fehler über die erste binäre Statusmeldung meldet, wobei die Meldung durch ein Quittungssignal zu einem Zeitpunkt zurücksetzbar ist, zu dem die Diagnoseeinrichtung den ausgegebenen Messwert über die zweite binäre Statusmeldung als gültig kennzeichnet.

Im Fehlerfall wird der Messwert im Rahmen einer durch die Ablaufzeit des ersten Timers vorgegebenen Reaktionszeit so lange wie möglich ausgegeben. Falls der Fehler innerhalb der Reaktionszeit wieder verschwindet, kann der Prozess ohne Beeinträchtigung oder Unterbrechung weiter laufen. Die Information, dass ein Fehler aufgetreten war, geht jedoch für den Anwender nicht verloren. Die Ablaufzeiten der beiden Timer sind parametrierbar und so an die Sicherheitsanforderung der Anlage anpassbar.

Zur weiteren Erläuterung der Erfindung wird im Folgenden auf die Figuren der Zeichnung Bezug genommen; im Einzelnen zeigen:
- Fig. 1: ein Ausführungsbeispiel des erfindungsgemäßen Feldgeräts,
- Fig. 2: ein Beispiel für die Reaktion des Feldgeräts bei einem schweren Fehler und
- Fig. 3: ein Beispiel für die Reaktion des Feldgeräts bei einem weniger schweren Fehler.

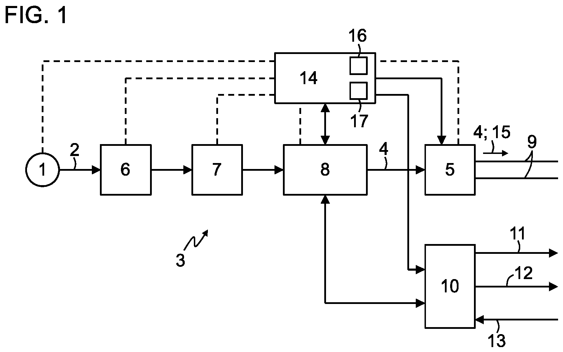

Fig. 1 zeigt in Form eines vereinfachten Blockschaltbildes ein Feldgerät mit Sensormitteln 1, hier in Form eines einzelnen Sensors, der eine Prozessgröße, zum Beispiel Druck, erfasst und in ein elektrisches Messsignal (Rohsignal) 2 umsetzt. Das Messsignal 2 wird in einer Signalverarbeitungseinrichtung 3 messtechnisch aufbereitet und zu einem Messwert 4 verarbeitet, der über eine Ausgabeeinrichtung 5 ausgegeben wird. Bei dem gezeigten Ausführungsbeispiel umfasst die Signalverarbeitung eine analoge Signalaufbereitung 6, z. B. Entzerrung, Filterung und Vorverstärkung, eine Analog-/DigitalUmsetzung 7 und eine digitale, mikroprozessorgesteuerte Signalverarbeitung 8, die den Messwert 4 erzeugt. Die Ausgabeeinrichtung 5 gibt den Messwert 4 hier in Form eines 4 bis 20 mA-Stromsignals auf einer Zweidrahtleitung 9 aus. Eine mit der digitalen Signalverarbeitung 8 kommunizierende digitale Ein- und Ausgabeeinheit 10 weist zwei Binärausgänge zur Ausgabe einer ersten und zweiten binären Statusmeldung 11, 12 und einen Binäreingang zur Eingabe eines Quittungssignals 13 auf.

Die Funktion des Feldgeräts wird von einer Diagnoseeinrichtung 14 überwacht, die zwischen schweren Fehlern, die praktisch einen Geräteausfall darstellen (z. B. Programmablauffehler, RAM-Fehler, Fehler des 4 bis 20 mA-Stromsignals), und weniger kritischen Fehlern (geräteinterne Temperaturüberschreitung, vorübergehender Ausfall der geräteinternen Kommunikation) unterscheidet. Bei Detektion eines Fehlers kennzeichnet die Diagnoseeinrichtung 14 den ausgegebenen Messwert 4 über die zweite binäre Statusmeldung 12 als ungültig. Bei Vorliegen eines schweren Fehlers wird die Ausgabeeinrichtung 5 unmittelbar dazu veranlasst, anstelle des Messwertes 4 einen Ersatzwert 15 kleiner als 3,6 mA oder größer als 21 mA auszugeben. Der Fehler selbst wird über die erste binäre Statusmeldung 11 gemeldet. Bei Vorliegen eines weniger kritischen Fehlers erfolgen die Ausgabe des Ersatzwertes 15 und die Meldung des Fehlers jeweils verzögert. Zu diesem Zweck enthält die Diagnoseeinrichtung 14 einen ersten Timer 16 mit einer vorgegebenen ersten Ablaufzeit und einen zweiten Timer 17 mit einer vorgegebenen zweiten Ablaufzeit.

Je nachdem, ob es sich bei dem detektierten Fehler um einen schweren Fehler oder einen weniger schweren Fehler handelt, veranlasst die Diagnoseeinrichtung 14 die Ausgabeeinrichtung 5 unmittelbar oder nach einer Verzögerung dazu, anstelle des Messwertes 4 einen Ersatzwert 15 kleiner als 3,6 mA oder größer als 21 mA auszugeben, den Fehler über eine erste binäre Statusmeldung 11 zu melden und den ausgegebenen Messwert 4 über die zweite binäre Statusmeldung 12 als vorübergehend ungültig zu kennzeichnen.

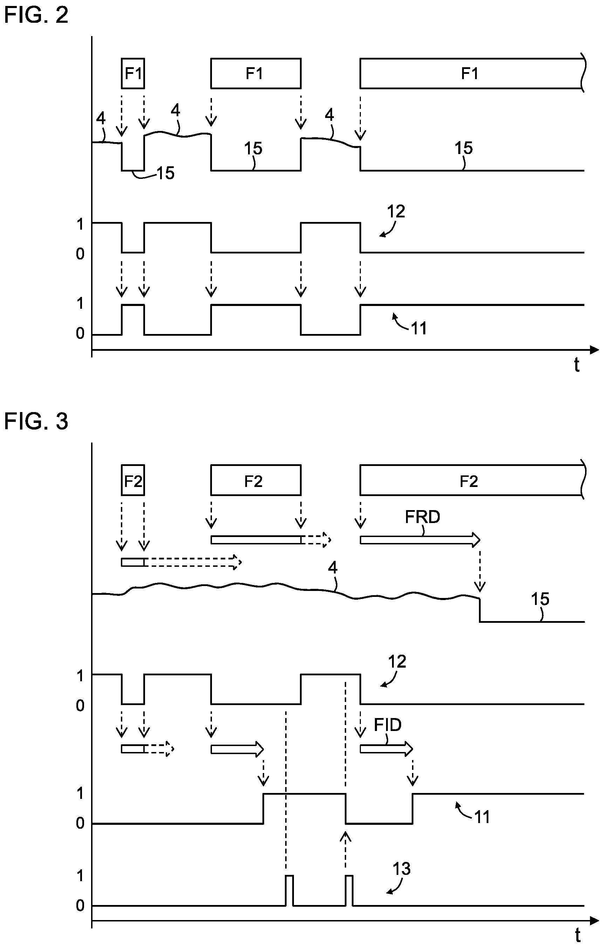

Fig. 2 zeigt ein Beispiel, bei dem im Verlauf der Zeit t ein schwerer Fehler F1 wiederholt auftritt, wobei die Dauer des Fehlers F1 von sehr kurz über kurz bis mittel oder lang zunimmt. Jedes Mal, wenn der schwere Fehler F1 auftritt, wird anstelle des analogen Messwerts 4 zwischen 4 und 20 mA ein Ersatzwert 15 von beispielsweise 3,6 mA ausgegeben. Die zweite binäre Statusmeldung 12, die die Gültigkeit des ausgegebenen Messwerts 4 mit einer logischen "Eins" bezeichnet, nimmt den logischen Zustand "Null" ein und kennzeichnet so den Messwert 4 als ungültig. Die erste binäre Statusmeldung 11 meldet den Fehler F1 mit einer logischen "Eins".

Fig. 3 zeigt ein Beispiel, bei dem im Verlauf der Zeit t anstelle des schweren Fehler F1 ein weniger schwerer Fehler F2 detektiert wird, wobei auch hier die Dauer des Fehlers F2 von sehr kurz über kurz bis mittel oder lang zunimmt. Wie bei Vorliegen eines schweren Fehlers F1 wird auch bei dem weniger schweren Fehler F2 der ausgegebene Messwert 4 während der Fehlerdauer über die zweite binäre Statusmeldung 12 als ungültig gekennzeichnet. Es erfolgt jedoch keine unmittelbare Ausgabe eines Ersatzwertes 15 und auch keine unmittelbare Fehlermeldung über die erste binäre Statusmeldung 11. Statt dessen werden jedes Mal, wenn der Fehler F2 auftritt, der erste Timer 16 mit der der ersten Ablaufzeit FRD (fault reaction delay) und der zweite Timer 17 mit der zweiten Ablaufzeit FID (fault indication delay) gestartet und am Ende des detektierten Fehlers F2 zurückgesetzt. Die Ablaufzeiten FRD, FID sind parametrierbar, wobei die zweite Ablaufzeit FID grundsätzlich kürzer als die erste Ablaufzeit FRD ist. Bei dem gezeigten Beispiel ist die Dauer des sehr kurzen Fehlers F2 geringer als beide Ablaufzeiten FRD, FID, so dass beide Timer 16, 17 vorzeitig zurückgesetzt werden. Die Dauer des nachfolgenden kurzen Fehlers F2 liegt zwischen den Ablaufzeiten FRD und FID, so dass nur der Timer 16 am Ende des Fehlers zurückgesetzt wird. Der zweite Timer 17 ist dagegen bereits vorher abgelaufen und meldet den Fehler über die erste binäre Statusmeldung 11 mit einer logischen "Eins". Diese Meldung, also die logische "Eins", bleibt so lange bestehen, bis sie durch ein von dem Anwender erzeugtes Quittungssignal 13 zurückgesetzt wird. Die Zurücksetzung ist nur dann wirksam, wenn zu diesem Zeitpunkt kein Fehler vorliegt. Wenn dagegen die Dauer des Fehlers F2 beide Ablaufzeiten FRD und FID übersteigt, veranlasst der erste Timer 16 bei Ablauf der ersten Ablaufzeit FRD die Ausgabe des Ersatzwertes 15.

Sehr kurze Fehler F2, deren Dauer kürzer als beide Ablaufzeiten FRD, FID sind, werden also ignoriert. Kurze Fehler F2, deren Dauer kürzer als die erste Ablaufzeit FRD und länger als die zweite Ablaufzeit FID sind, werden über die erste binäre Statusmeldung 11 gemeldet und können aber im Fehlerfreien Gerätezustand von dem Anwender quittiert werden. Alle länger anhaltenden Fehler werden über die erste binäre Statusmeldung 11 gemeldet und führen zur Ausgabe des Ersatzwertes 15.

## Patentansprüche

1. Feldgerät zur Bestimmung einer Prozessgröße in der Prozessautomatisierung, mit
- Sensormitteln (1) zum Erfassen und Umsetzen der Prozessgröße in ein elektrisches Messsignal (2),
- einer Auswerteeinrichtung (3) zum Verarbeiten des Messsignals (2) zu einem Messwert (4),
- einer Ausgabeeinrichtung (5) zur Ausgabe des Messwerts (4) und
- einer Diagnoseeinrichtung (14) zur Überwachung der Funktion des Feldgeräts und Erzeugung und Ausgabe von binären Statusmeldungen (11, 12), wobei die Diagnoseeinrichtung (14) dazu ausgebildet ist, bei Detektion mindestens eines vorgegebenen Fehlers (F2) diesen über eine erste binäre Statusmeldung (11) zu melden, den ausgegebenen Messwert (4) über eine zweite binäre Statusmeldung (12) als vorübergehend ungültig zu kennzeichnen, und/oder die Ausgabeeinrichtung (5) zur Ausgabe eines Ersatzwertes (15) anstelle des Messwertes (4) zu veranlassen,
**dadurch gekennzeichnet, dass**
- die Diagnoseeinrichtung (14) einen ersten Timer (16) mit einer vorgegebenen ersten Ablaufzeit (FRD) und einen zweiten Timer (17) mit einer vorgegebenen zweiten Ablaufzeit (FID) enthält,
- die zweite Ablaufzeit (FID) kürzer als die erste Ablaufzeit (FRD) ist,
- beide Timer (16, 17) bei Detektion des Fehlers (F2) gestartet und am Ende des detektierten Fehlers (F2) zurückgesetzt werden,
- der erste Timer (16) bei Ablauf der ersten Ablaufzeit (FRD) die Ausgabe des Ersatzwertes (15) veranlasst und
- der zweite Timer (17) bei Ablauf der zweiten Ablaufzeit (FID) den Fehler (F2) über die erste binäre Statusmeldung (11) meldet, wobei die Meldung durch ein Quittungssignal (13) zu einem Zeitpunkt zurücksetzbar ist, zu dem die Diagnoseeinrichtung (14) den ausgegebenen Messwert (4) über die zweite binäre Statusmeldung (12) als gültig kennzeichnet.

2. Feldgerät nach Anspruch 1, **dadurch gekennzeichnet, dass** die Ausgabeeinrichtung (5) zur Ausgabe des Messwertes (4) in Form eines analogen Ausgangssignals ausgebildet ist.

## Claims

1. Field device for determining a process variable in process automation, having
- sensor means (1) for detecting and converting the process variable into an electrical measuring signal (2),
- an evaluation facility (3) for processing the measuring signal (2) to form a measured value (4),
- an output facility (5) for outputting the measured value (4) and
- a diagnostic facility (14) for monitoring the function of the field device and generating and outputting binary status reports (11, 12), wherein the diagnostic facility (14) is embodied to report at least one predetermined error (F2), upon detection of the same, by way of a first binary status report (11), to identify the output measured value (4) as temporarily invalid by way of a second binary status report (12) and/or to trigger the output facility (5) to output a replacement value (15) instead of the measured value (4),
**characterised in that**
- the diagnostic facility (14) contains a first timer (16) with a predetermined first expiration time (FRD) and a second timer (17) with a predetermined second expiration time (FID),
- the second expiration time (FID) is shorter than the first expiration time (FRD),
- both timers (16, 17) are started upon detection of the error (F2) and are reset at the end of the detected error (F2),
- the first timer (16) triggers the output of the replacement value (15) when the first expiration time (FRD) has elapsed and
- the second timer (17) reports the error (F2) by way of the first binary status report (11) when the second expiration time (FID) has elapsed, wherein the report can be reset by an acknowledgment signal (13) at a point in time at which the diagnostic facility (14) identifies the output measured value (4) as valid by way of the second binary status report (12).

2. Field device according to claim 1, **characterised in that** the output facility (5) is embodied to output the measured value (4) in the form of an analogue output signal.

## Revendications

1. Appareil sur site pour déterminer une grandeur de processus dans l'automatisation de processus, comprenant
- des moyens (1) de capteur pour détecter la grandeur de processus et la transformer en un signal (2) électrique de mesure,
- un dispositif (3) d'exploitation pour transformer le signal (2) de mesure en une valeur (4) de mesure,
- un dispositif (5) d'émission pour émettre la valeur (4) de mesure et
- un dispositif (14) de diagnostic pour contrôler le fonctionnement de l'appareil sur site et pour produire et émettre des messages (11, 12) d'état binaires, le dispositif (14) de diagnostic étant constitué pour, à la détection d'au moins un défaut (F2) donné à l'avance, l'annoncer par un premier message (11) d'état binaire, caractériser la valeur (4) de mesure émise par un deuxième message (12) d'état binaire comme non valable temporairement et/ou faire que le dispositif (5) d'émission émette une valeur (15) de remplacement au lieu de la valeur (4) de mesure,
**caractérisé en ce que**
- le dispositif (14) de diagnostic comporte une première minuterie (16), ayant un premier temps (FRD) de déroulement donné à l'avance, et une deuxième minuterie (17), ayant un deuxième temps (FID) de déroulement donné à l'avance,
- le deuxième temps (FID) de déroulement est plus court que le premier temps (FRD) de déroulement,
- les deux minuteries (16, 17) sont lancées à la détection du défaut (F2) et reviennent à l'état initial à la fin du défaut (F2) détecté,
- la première minuterie (16) provoque, à l'expiration du premier temps (FRD) de déroulement, l'émission de la valeur (15) de remplacement et
- la deuxième minuterie (17) annonce, à l'expiration du deuxième temps (FID) de déroulement, le défaut par le premier message (11) d'état binaire, le message pouvant être renvoyé par un signal (13) d'accusé de réception à un instant où le dispositif (14) de diagnostic caractérise comme valable la valeur (4) de mesure émise par le deuxième message (12) d'état binaire.

2. Appareil sur site suivant la revendication 1, **caractérisé en ce que** le dispositif (5) d'émission est constitué pour émettre la valeur (4) de mesure sous la forme d'un signal de sortie analogique.
